(19) Europäisches Patentamt
European Patent Office
Office européen des brevets

(11) **EP 3 887 419 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **19804674.0**

(22) Anmeldetag: **11.11.2019**

(51) Internationale Patentklassifikation (IPC):
*C08G 18/48* (2006.01)    *C08G 18/76* (2006.01)
*C08G 18/20* (2006.01)    *C08G 18/18* (2006.01)
*C08G 18/42* (2006.01)    *C08G 18/40* (2006.01)
*C08G 101/00* (2006.01)    *C08G 18/28* (2006.01)

(52) Gemeinsame Patentklassifikation (CPC):
**C08G 18/485; C08G 18/18; C08G 18/2027;
C08G 18/2865; C08G 18/2875; C08G 18/4018;
C08G 18/4222; C08G 18/4812; C08G 18/4829;
C08G 18/7671;** C08G 2110/0008; C08G 2110/0058;
C08G 2350/00

(86) Internationale Anmeldenummer:
**PCT/EP2019/080857**

(87) Internationale Veröffentlichungsnummer:
**WO 2020/108971 (04.06.2020 Gazette 2020/23)**

(54) **POLYURETHAN-SCHAUMSTOFF-FORMULIERUNG UND SCHALLISOLIERUNGEN MIT DARAUF BASIERENDEN SCHÄUMEN**

POLYURETHANE-FOAMED FORMULATIONS AND NOISE INSULATIONS WITH FOAMS BASED THEREON

FORMULATION DE MOUSSE DE POLYURÉTHANE ET ISOLATIONS ACOUSTIQUES COMPORTANT DES MOUSSES À BASE DE CETTE FORMULATION

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **28.11.2018 DE 102018130176**

(43) Veröffentlichungstag der Anmeldung:
**06.10.2021 Patentblatt 2021/40**

(73) Patentinhaber: **Adler Pelzer Holding GmbH
58099 Hagen (DE)**

(72) Erfinder:
• **BECKER, Helmut
44894 Bochum (DE)**
• **SCHULZE, Volkmar
84069 Schierling (DE)**

(74) Vertreter: **Hannke Bittner & Partner mbB
Regensburg
Prüfeninger Straße 1
93049 Regensburg (DE)**

(56) Entgegenhaltungen:
**WO-A1-2018/022368    WO-A1-2018/022368
DE-A1- 4 001 044    DE-A1- 4 001 044**

**Beschreibung**

Gegenstand der Erfindung ist eine Polyurethan-Schaumstoff-Formulierung auf Basis von konventionellen Polyether- und Polyesterpolyolen (Hybrid-Formulierung) auf Basis nachwachsender Rohstoffe mit MDI zur Herstellung bevorzugt viskoelastischer Polyurethan (PUR)-Formschäume und Schallisolierungen mit darauf basierenden Schäumen.

Weichelastische sowie viskoelastische Polyurethan-Formschäume sind im Bereich der Fahrzeugakustik weit verbreitet. Übliche weichelastische Schäume werden allgemein dem "high resilience"- also hochelastischen Typ zugeordnet und weisen eine ausgeprägte Federcharakteristik mit spontanem bzw. schnellem Rückstellverhalten auf. Dem entgegen stehen die viskoelastischen Schaumtypen, die sich als wesentliches Unterscheidungsmerkmal zu weichelastischen Schaumtypen durch ein verzögertes Erholungsverhalten nach Druckverformung auszeichnen. Dabei erreichen viskoelastische Schäume im Vergleich zu "high resilience" Schäumen in der Regel wesentlich bessere Dämpfungseigenschaften.

Im Gegensatz zu typischerweise im Blockschaumverfahren hergestellten, weichelastischen oder auch viskoelastischen Schäumen, die in der Matratzen- oder Polsterindustrie zum Einsatz kommen, werden akustisch wirksame Bauteile im Bereich der Fahrzeugakustik bevorzugt direkt als Formteile mit der gewünschten Bauteilgeometrie hergestellt. Dazu kommen in der Regel Zweikomponenten-Systeme zum Einsatz, wobei eine Komponente des Reaktivsystems diverse (Poly)-Isocyanate darstellen, die zweite Komponente aus einem komplexen Gemisch meist unterschiedlicher Polyole, Treibmittel, Katalysatoren, Stabilisatoren sowie gegebenenfalls weiterer Additive besteht.

Die typischen Materialeigenschaften dieser Schäume werden primär von den eingesetzten Polyoltypen, deren Mengenverteilung, dem Vernetzungsgrad und dem gewählten Raumgewicht bestimmt. Im Hinblick auf die beabsichtigte Verwendung, aber auch unter Berücksichtigung häufiger Unverträglichkeiten werden entweder Polyester- oder Polyetherpolyole verwendet. Im Bereich der Schallisolierungen überwiegen Schaumstoffe auf Basis von Polyetherpolyolen und MDI.

Die jeweiligen Polyole unterscheiden sich in im Wesentlichen in Bezug auf Funktionalität, Reaktivität und Molekularmasse, wobei die Funktionalität und die grundsätzliche Struktur unmittelbar vom eingesetzten Startermolekül bestimmt wird. Als chemisches Treibmittel wird der Polyolkomponente meist Wasser zugesetzt, wobei das Wasser mit dem (Poly)-Isocyanat reagiert und Kohlendioxid freigesetzt wird, das als eigentliches Treibmittel fungiert.

Weichelastische Schäume kommen in unterschiedlichen Ausführungen für ebenso unterschiedliche Akustikanwendungen zum Einsatz. Die Anwendungen umfassen reine Absorber bis hin zu Feder-Masse-Aufbauten. Die Dämmwirkung erhöht sich dabei in Abhängigkeit vom Raumgewicht bzw. der kombinierten Masseschicht. Im Vergleich zu weichelastischen "high resilience" Typen zeichnen sich viskoelastische Formschäume meist durch bessere Dämpfungseigenschaften aus und werden deshalb insbesondere im Premiumsektor bevorzugt eingesetzt. Dieses speziell viskoelastische Materialverhalten lässt sich in pneumatische Effekte und strukturelle Eigenschaften unterteilen, stellt aber meistens eine Kombination aus beiden dar. Der sogenannte pneumatische ("Asthma")-Effekt beruht auf sehr kleiner Porengröße, oft auch in Kombination mit nicht vollständig offener Zellstruktur, die den Luftaustausch bei Kompression sowie während der Erholung verlangsamt. Die strukturellen Eigenschaften ergeben sich aus der Kombination von weichen und harten Segmenten innerhalb der Polymermatrix und lassen sich entsprechend über die Mengenverteilung unterschiedlich funktioneller Polyole sowie die genannten Primär-Parameter steuern.

Es sind zahlreiche unterschiedliche Kombinationen von Polyetherpolyolen bekannt, um weichelastische oder viskoelastische Formschäume herzustellen. Der Übergang von weichelastisch bis viskoelastisch ist fließend. Das bedeutet, dass anscheinend klar sprungelastische Schäume bereits messbar viskoelastische Materialeigenschaften aufweisen können. Als messbare Größe hat sich der Verlustfaktor, gemessen nach der Vibrometermethode etabliert. Als Faustformel gilt, je höher der Verlustfaktor, desto eher ist das typische viskoelastische Materialverhalten auch haptisch erkennbar. Für Schallisolationsanwendungen bedeutet ein höherer Verlustfaktor meist auch bessere Dämpfungseigenschaften.

Neben dem Verlustfaktor spielt das entsprechende E-Modul dabei eine entscheidende Rolle. So können vergleichbar härtere Schäume trotz hohem Verlustfaktor ein durchaus schlechteres akustisches Isolationsverhalten aufweisen als solche mit niedrigem Verlustfaktor, aber deutlich geringerer Härte. Die bekannten Materialzusammensetzungen unterschiedlichster, oft speziell für die Anwendung in viskoelastischen Schäumen vermarkteten Polyetherpolyole zeigen eine zu erwartende Abhängigkeit von E-Modul, Verlustfaktor und MDI-Index. Um im Falle der viskoelastischen Schäume genügend viele Hartsegmente zu erhalten, ist ein entsprechend hoher Vernetzungsgrad, also hoher MDI-Index notwendig. Das führt aber gleichzeitig zu tendenziell höherer Festigkeit bzw. erhöhtem E-Modul.

Der Wirkungsgrad geschäumter, akustisch wirksamer Kfz-Verkleidungsteile wird durch das jeweilige Bauteilkonzept als Ganzes, insbesondere durch die speziellen Eigenschaften der eingesetzten Schaumsysteme bestimmt. Die akustische Wirksamkeit wird dabei grundsätzlich in die zwei Kategorien Absorption und Isolation unterteilt. Der Absorptionsgrad eines formgeschäumten Bauteils ist primär abhängig von der Porosität und Größe der dem Schall offen zugewandten Oberfläche und der inneren Zellmorphologie (Zellgröße- und Verteilung, Anzahl und Verhältnis an offenen und geschlossenen Zellen), die ihrerseits die leistungsbestimmenden Eigenschaften Strömungswiderstand und Tortuosität wesentlich beeinflussen.

Im Vergleich dazu werden die Isolationseigenschaften von Formschäumen von deren Dichte und der elastischen Federeigenschaften bestimmt. Dabei spielt neben der Härte bzw. hier treffender Weichheit des Schaums vor allem das Elastizitätsverhalten eine entscheidende Rolle. Es sind sowohl sprungelastische als auch viskoelastische Schaumtypen bekannt, wobei insbesondere viskoelastische Versionen in weicher Einstellung aufgrund der höheren Dämmung - ausgedrückt als Verlustfaktor - deutlich bessere Isolationswirkung erzielen, als sprungelastische Schäume in vergleichbarer Einstellung hinsichtlich Härte und formgeschäumter Dichte.

Um die (Blech-) bedämpfenden Eigenschaften solcher Schäume zu erhöhen, werden in der Regel analog zu hochelastischen Schäumen entsprechende Masseschichten eingesetzt und zu sogenannten Feder-Masse-Elementen kombiniert und hinterschäumt. Die akustische Wirksamkeit des Gesamtaufbaus wird dann weiterhin durch die oben genannten Eigenschaften der Feder (Formschaum), zusätzlich jedoch von den Eigenschaften der Masse-Schicht (Flächengewicht, Biegeweichheit) bestimmt. In dieser Kombination führt ein höheres Flächengewicht bei gleicher Hinterschäumung grundsätzlich zu einer verbesserten Bedämpfung schwingender Elemente, die im Automobilbereich meistens Bleche darstellen. Oft werden die Bleche selbst konstruktiv beruhigt und zusätzlich mit (schweren) Bedämpfungsfolien ausgestattet, um das akustische Verhalten zu verbessern. Diese Maßnahme führt jedoch unmittelbar zu einem höheren Fahrzeuggewicht. Gleiches gilt für ein höheres Flächengewicht der Masseschicht bei Feder-Masse-Aufbauten, wobei dann lediglich die Masse vom Blech zum Akustik-Bauteil verschoben wird. Dieser Nachteil soll mit der vorliegenden Erfindung gelöst werden, indem die Leistungsfähigkeit hinsichtlich des Verlustfaktors des Formschaumes durch den Einsatz von speziellen Formulierung unter Einsatz von Polyetherpolyolen und pflanzlich basierten Polyesterpolyolen signifikant erhöht wird, ohne jedoch den Schaum zu verhärten. Die so optimierte Isolationswirkung des Schaumes soll es ermöglichen die deutliche Reduzierung oder den Entfall der erwähnten Blechbedämpfungen und / oder reduzierte Flächengewichte bei Feder-Masse-Elementen.

DE 40010044A1 offenbart beispielsweise Polyurethan-Schaumstoff-Formulierungen für viskoelastische Schäume.

Die vorgenannte Aufgabe wird in einer ersten Ausführungsform der Erfindung gelöst durch eine Polyurethan-Schaumstoff-Formulierung für die Herstellung von viskoelastischen PUR-Formschäumen, umfassend :

a) ein Polyesterpolyol mit einer Hydroxyl-Funktionalität von 2, einer Hydroxylzahl im Bereich von 50 bis 150 mgKOH/g, insbesondere einer Hydroxylzahl von 65 bis 90 mgKOH/g,
b) gegebenenfalls ein Polyetherpolyol mit einer Hydroxyl-Funktionaliät von 3, einer Hydroxylzahl im Bereich von 180 bis 250 mgKOH/g, insbesondere einer Hydroxylzahl von 220 bis 240 mgKOH/g,
c) ein Polyetherpolyol mit einer Hydroxyl-Funktionalität von 3, einer Hydroxylzahl im Bereich von 20 bis 40 mgKOH/g, insbesondere einer Hydroxylzahl von 30 bis 35 mgKOH/g,
d) ein Block/ Copolymer mit einer Hydroxylzahl im Bereich von 25 bis 45 mgKOH/g, insbesondere einer Hydroxylzahl von 30 bis 40 mgKOH/g, und
e) eine Kombination katalytisch wirksamer sowie stabilisierender Additive,

wobei der Anteil der Komponente (a) 5 bis 30 Gew.-%, bezogen auf die Polyolkompo-nente beträgt.

Um die oben genannten Polyole spezifizieren zu können, haben sich im Stand der Technik die vorgenannten verschiedenen Kenngrößen herauskristallisiert:

i.) Die Hydroxyl-Funktionalität, welche vom Starter-Molekül abhängt, auf dem aufbauend das Polyetherpolyol synthetisiert wird;
ii.) die Hydroxyl- oder OH-Zahl, welche ein Maß für den Gehalt an Hydroxylgruppen ist, und in mg KOH/g angegeben wird. Sie wird gemäß DIN 53240 bestimmt;
iii.) die Molekularmasse (Mw), welches ein Maß für die Länge der Polyoxyalkylen-Ketten der Polyetherpolyole ist.

Die oben genannten Größen können dabei über die folgende Gleichung in Bezug zueinander gesetzt werden:

$$56100 = \text{OH-Zahl} \cdot (\text{Mw/Hydroxyl-Funktionalität}).$$

Die zum Einsatz kommenden Polyole unterscheiden sich durch verwendete Startermolekül, die resultierende Funktionalität, die Molekularmasse sowie die Reaktivität. Darüber hinaus sind auch gezielte Modifizierungen des Materialverhaltens über die Isocyant-Komponente möglich, z.B. unter Verwendung von Prä-Polymeren.

Ziel der vorliegenden Erfindung ist es, die im Sinne der gewünschten akustischen Wirksamkeit negative Abhängigkeit von Verlustfaktor und Vernetzungsgrad durch den Einsatz besser geeigneter Komponenten umzukehren und insbesondere den Verlustfaktor der so hergestellten Formschäume deutlich anzuheben. Die signifikant verbesserte Isolationswirkung dieser Formschäume stellt damit die funktionelle Grundlage für Schallisolierungen dar, die daraus hergestellt werden. Im Gegensatz zu den bekannten, entweder rein auf Polyether- bzw. Polyesterpolyolen basierenden Reaktivsystemen kommt bei der vorliegenden Erfindung eine Hybrid-Formulierung zum Einsatz, bei der konventionelle, Erdöl-basierte Polyetherpolyole gegebenenfalls mit Polyesterdiolen auf Basis von nachwachsenden Rohstoffen, hier CNSL (Cashew Nut Shell Liquid) kombiniert werden und sich daraus signifikant bessere akustische wirksame Materialeigenschaften ableiten.

In erster Linie führt die spezielle Struktur der CNSL-basierten Polyesterdiole, insbesondere das charakteristische, natürliche Vorliegen von Hartsegmenten in Form von einem unmittelbar über eine Hydroxylgruppe zugängliche aromatischen Ring, aber auch die vergleichsweise hohe Reaktivität dieser Polyesterpolyole dazu, dass bereits bei niedrigem MDI-Index ein im Vergleich deutlich höherer Verlustfaktor in Kombination mit vergleichsweise niedrigem E-Modul erreicht werden kann. Das führt bei gleicher Gesamt-Systemabstimmung - also gleichem MDI-Index sowie gleicher formgeschäumter Dichte zu signifikant verbesserten akustischen Materialeigenschaften, als beim Einsatz konventioneller Reinsysteme. Das ermöglicht zum Beispiel eine bereits oben erwähnte Reduzierung des Flächengewichts bis hin zum Entfall sämtlicher Bedämpfungsfolien bzw. deutlich gewichtsreduzierter Masseschichten bei typischen Feder-Masse-Elementen bei mindestens gleichwertigem Akustikverhalten oder einer signifikant verbesserte Performance in High-End-Anwendungen, bei denen spezieller Schwerpunkt auf Geräuschkomfort liegt und das Konstruktionsgewicht eine eher untergeordnete Rolle spielt.

Gleichzeitig versetzt es den Anwender in die Lage, einen Beitrag zur Nachhaltigkeit zu leisten, weil das Ausgangsmaterial auf nachwachsenden Rohstoffen basiert, die jedoch im Gegensatz zu vielen anderen Produkten auf Basis von pflanzlichen Ölen nicht mit der Nahrungsbeschaffung in Konkurrenz stehen, sondern als natürliches Nebenprodukt gewonnen werden.

Die erfindungsgemäßen Rezepturen basieren auf Polyetherpolyolen. Die Abmischung mit dem CNSL-basierten Polyesterpolyol führt zu besagten Hybrid-Formulierungen. Im Einsatzbereich der Akustikbauteile für den Automobilbereich üblich sind sozusagen sortenreine Formulierungen, also entweder Polyether- oder Polyester-Zusammensetzungen, die je nach Verwendungszweck typische Vor- und Nachteile aufweisen.

Beim dem zur Herstellung der Hybrid-Formulierungen eingesetzten Polyesterpolyol handelt es sich bevorzugt um ein Polyesterdiol, das vom CNSL (Cashew Nutshell Liquid) abgeleitet ist. Typenbezeichnung Cardolite® NX-9203 (Produkt der Cardolite Corporation), difunktional, mit einer Hydroxylzahl 98mgKOH/g, Viskosität von 2650cps bei 25°C und einem kalkulierten Gehalt nachwachsender Rohstoffe von 69%.

Die erfindungsgemäßen Polyetherpolyole b), c) und d) werden vorzugsweise durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine hergestellt.

Besonders bevorzugt unter den oben genannten Epoxiden sind Ethylenoxid und Propylenoxid. Ganz besonders bevorzugt sind die verwendeten Polyetherpolyole nur aus Propylenoxid als Epoxid-Komponente aufgebaut.

Werden mehrere Epoxide zur Synthese der Polyetherpolyole verwendet, so können letztere jede gewünschte Anordnung der Oxyalkyleneinheiten aufweisen. So kann es sich entsprechend um Homopolymere (bei der Verwendung nur eines Epoxids), Copolymere d), "random"-Copolymere, "capped"-Polymere oder um Polymere handeln, die mit einem Gemisch verschiedener Epoxide ge-"tipped" sind, um einen gewünschten Gehalt an primären Hydroxylgruppen zu erzielen.

Unter nachwachsenden Rohstoffen im Sinne der vorliegenden Erfindung werden in der Natur vorkommende und in dieser Form auch isolierbare Verbindungen verstanden.

Sich nicht von einem nachwachsenden Rohstoff ableitend bedeutet im Sinne der vorliegenden Erfindung, dass das Kohlenstoffgerüst des betreffenden nachwachsenden Rohstoffs nicht mehr innerhalb des Polyetherpolyols der Komponente (b) enthalten ist. Dies bedeutet insbesondere, dass besagtes Polyetherpolyol nicht durch zum Beispiel Umsetzung eines nachwachsenden Rohstoffes mit Epoxiden unter Bildung eines Polyetherpolyols erhalten wird.

Beispiele für mögliche nachwachsende Rohstoffe sind Rizinusöl, Polyhydroxyfettsäure, Riziniolsäure, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Nachtkerzenöl, Wildrosenöl, Distelöl, Walnussöl, mit Hydroxylgruppen modifizierte Fettsäuren und Fettsureester auf Basis von Myristoleinsäure, Palmitoleinsäure, Ölsäure, Vaccensäure, Pertoselinsäure, Gadoleinsäure, Erucasäure, Nervonsäure, Linolsäure, -und -Linilensäure, Stearidonsäure, Arachidonsäure, Timnodonsäure, Clupanodonsäure, Cervonsäure.

Dabei schließen die oben erwähnten nachwachsenden Rohstoffe auch chemisch modifizierte Verbindungen ein, bei denen allerdings das Kohlenstoffgerüst an sich in seiner Konnektivität unverändert bleibt (z.B. mit Hydroxylgruppen modifizierte nachwachsende Rohstoffe, entstanden z.B. durch Hydroxylierung von Verbindungen oder hydrierte Produkte).

Mögliche Starterverbindungen sind zum Beispiel Dicarbonsäuren, wie Bernsteinsäure, Adipinsäure, Phthalsäure und Terephthalsäure.

Als weitere mögliche Starterverbindungen können beispielsweise auch Ammoniak oder aliphatische und/oder aromatische Amine, die gegebenenfalls substituiert sein können, wie zum Beispiel N-monoalkyl-, N,N-dialkyl- und/oder N,N'-dialkyl-substituierte Diamine verwendet werden. Sie weisen mindestens eine primäre oder sekundäre Aminogruppe auf, wie beispielsweise 1,2-Diaminoethan, Oligomere des 1,2-Diaminoethans (beispielsweise Diethylentriamin, Triethylentetramin oder Pentaethylenhexamin), 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensation von Anilin mit Formaldehyd erhalten werden. Weitere geeignete Startermoleküle sind Alkanolamine, wie beispielsweise Ethanolamin, N-Methyl- und N-Ethylethanolamin, Dialkanolamine, wie beispielsweise Diethanolamin, N-Methyl- und N-Ethyldiethanolamin und Trialkanolamine, wie beispielsweise Triethanolamin.

Weitere geeignete Starterverbindungen sind solche mit zwei oder mehr Hydroxylgruppen, wie beispielsweise Wasser, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerin, Trimethylolpropan, Pentaerythrit, Sorbit und Saccharose, Rizinusöl, modifiziertes Sojaöl . Die Starterverbindungen können allein oder als Gemische verwendet werden.

Erfindungsgemäß beträgt der Anteil der Komponente (a) 5 bis 30 Gew.-%, bezogen auf die Polyolkomponente. Bevorzugt liegen die Massenanteile der Komponenten (a) bis (d) (gegebenenfalls unabhängig voneinander) in den folgenden Mengen: (a) 10 bis 30 Gew.-%, insbesondere bevorzugt 20 bis 30 Gew.-%; (b) 0 bis 55 Gew.-%, insbesondere bevorzugt 5 bis 20 Gew.-%; (c) 40 bis 75 Gew.-%, insbesondere bevorzugt 50 bis 70 Gew.-% und (d) 5 bis 50 Gew.-%, insbesondere bevorzugt 5 bis 20 Gew.-%. Die Angaben in Gew.-% beziehen sich dabei jeweils auf die Gesamtmasse der Polypolyol-Zusammensetzung. Diese Gewichtsanteile sind dabei insofern bevorzugt, als sie eine besonders hohe Viskoelastizität im erfindungsgemäßen Polyurethanschaum zur Folge haben.

Besonders bevorzugt wird bei Komponente (b) und (c) ein Triol als Startermolekül verwendet, insbesondere Glycerin. Im Falle der Komponente (d) wird bevorzugt ein 1,2-Diol als Startermolekül, insbesondere Propylenglykol, verwendet.

Herstellung von Formteilen:

Bodenverkleidungs-Isolation:

Für den Bereich mit erhöhtem Isolationsbedarf / Entfall beziehungsweise reduziertes Flächengewicht der Entdröhnungsfolien.

Unter Beachtung der Korrelation akustische Wirksamkeit - verfügbarer Bauraum / Gewicht / Trittfestigkeit werden hier die Schaumeigenschaften angepasst. Bei der Einstellung der Adhäsion der Schaumoberfläche sind die Bodenverkleidungs-Montagebedingungen zu berücksichtigen.

Stirnwand innen:

Die Entwicklung immer leistungsfähiger Motoren führt gleichzeitig zu höherer Lärmentwicklung, die vor allem über die Stirnwandverkleidung im Innenraum isoliert werden muss. Das erforderte leistungsfähigere Bauteile, die effizient von Feder-Masse-Konstruktionen, besonders solchen mit hohen Flächengewichten in der Masseschicht dargestellt werden können. Gleichzeitig führt unter anderem der Trend zu immer komplexeren Vernetzung bis hin zu autonomen und smarten Konzepten und der dazu notwendigen Zusatzkomponenten zu immer kleinerem Bauraum, der für die eigentliche Stirnwandisolation zur Verfügung steht. In der Folge werden diese Bauteile immer dünner und das fehlende (hier Schaum) Volumen bzw. die fehlende Schichtdicke erfordert (akustisch) besonders wirksame Schaumsysteme. Ein viskoelastischer Weichschaum auf Basis der beschriebenen Hybrid-Formulierung kompensiert aufgrund des sehr hohen Verlustfaktors das fehlende Isolationsvolumen und ermöglicht so vergleichsweise kompakte Isolationskonzepte, die mit konventionellen Systemen nicht darstellbar sind. Des Weiteren lassen sich Konzepte realisieren, die bei gleichgroßer Schaumisolation eine deutlich leichtere Masseschicht ermöglichen.

(e)-Motorkapsel:

Bekannt ist eine akustisch wirksame Motorkapsel für E-Motoren z.B. bei Tesla, Model S, Aufbau PUR-Weichschaum und Schwerfolie. Zur Darstellung der geforderten Wirksamkeit des Feder-Masse-Aufbaus ist ein hohes Flächengewicht der Schwerfolie notwendig. Vor allem bedingt durch den im Vergleich sehr hoch einstellbaren Verlustfaktor der vorliegenden Hydrid-Formulierung wird eine deutliche Verbesserung der akustischen Wirkung erreicht. Gleichzeitig kann Gewicht seitens Schwerfolie eingespart werden, was nicht nur für Elektrofahrzeuge eine wichtige Forderung darstellt. Über das CNSL-basierte Polyesterdiol bzw. dessen Ringstruktur erhöht sich die Temperaturstabilität und das sicherheitsrelevante Brennverhalten wird verbessert.

Hohe Variationsbreite der einstellbaren Materialeigenschaften, wobei primär das ausgesuchte Polyesterdiol Cardolite® NX-9203 zur Modellierung des viskoelastischen Verhaltens eingesetzt wird

| Einstellbare Schaumeigenschaften | | visko-modifiziert | hoch-viskoelastisch |
|---|---|---|---|
| Dichte | 45 bis 120kg/m$^3$ | 45 bis 75 | 70 bis 110 |
| Speichermodul | 40 bis 600 kN/m$^2$ | 60 bis 90 | 100 bis 600 |
| Verlustfaktor | 0,1 bis 0,8 | 0,1 bis 0,26 | 0,4 bis 0,6 |

Gewichtsreduzierung hinsichtlich gesamtem Bauteilkonzept, $CO_2$-Reduktion durch Gewichtseinsparung und (anteiliger) Verwendung von nachwachsenden Rohstoffen, Kompakt-Isolation, Verbessertes Brennverhalten ermöglicht Reduzierung / Entfall zusätzlicher Flammschutzmittel.

Der Einsatz von Misch(Hybrid)Systemen, die sowohl konventionelle Polyether als auch Polyesterpolyole, speziell Polyesterdiole auf Basis von CNSL enthalten und für den Einsatz in viskoelastischen Formweichschäumen optimiert sind und die besonderen viskoelastischen Materialeigenschaften vom eingesetzten Polyesterdiol (Cardolite® NX-9203) bestimmt wird. Die so erhaltenen Weichschäume zeichnen sich im Vergleich zu herkömmlichen "reinrassigen" Systemlösungen durch einen hohen bis extrem hohen Verlustfaktor aus, der speziell bei Verwendung in Feder-Masse-Elementen eine signifikante Reduzierung der erforderlichen Masseschicht ermöglicht.

Ausführungsbeispiele

Basispolyol war Voranol® CP6001 (DOW Chemicals), Molekularmasse 6000g/mol, OH-Funktionalität = 3, Hydroxylzahl 28 bis 32mgKOH/g, ein ethoxyliertes / propoxyliertes Polyetherpolyol auf Basis von Glycerin.

Zusätzlich wurde (je nach Ausführungsart) ein Polyoxyalkylentriol auf Glycerinbasis verwendet, Handelsname Rokopol® V700 (von PCC Rokita), OH-Funktionalität = 3, Hydroxylzahl 225 bis 250mgKOH/g, Molekülmasse 700g/mol, das häufig in konventionellen, rein Polyetherpolyolbasierten Viskoelastik-Systemen zur Darstellung der viskoelastischen Materialeigenschaften eingesetzt wird.

Als Zellöffner kam Rokopol® M1170 (PCC Rokita), ein Copolymer von Ehtylenoxid und Propylenoxid auf Glycerinbasis zum Einsatz.

Als MDI-Komponente wurde Specflex® NS540 (DOW Chemicals) verwendet, NCO-Gehalt 31,36 bis 32,57%, Acidität 130 bis 170mg/kg, Viskosität 38 bis 60mPa.s bei 25°C.

RZETA® (Tosoh Corporation) ist ein aminbasierter, reaktiver Gel-Katalysator, der sich vom TEDA ableitet und über die vorliegende OH-Gruppe aktiv in der PUR-Matrix eingebunden wird.

Dabco® NE300 (Evonik, ehemals Air Products) unterstützte die Wasser-Isocyanat-Reaktion als sog. Blas- bzw. Treibkatalysator und wurde über die Wasserstoff-azide NH-Gruppe reaktiv eingebunden.

Tegostab® B8736LF2 steht stellvertretend für die die low-fogging Silikontenside, die vor allem für die Zellstabilisierung eingesetzt wurden, darüber hinaus auch Einfluss auf Zellgröße- und Verteilung nahmen und die Mischbarkeit der eingesetzten Komponenten verbesserte.

Concentrol® STB-PU1259PF ist ebenfalls ein emissions-optimierter Stabilisator von Productos Concentrol.

<u>Beispiel 1:</u>

Ausführungsbeispiel für hoch-viskoelastischen Formweichschaum im Sinne der vorliegenden Erfindung (Mengenangabe in Gewichtsteilen)

Polyol-Komponente (Hybrid-Formulierung)

| | | |
|---|---|---|
| Voranol® CP6001 | 50 | |
| Rokopol® V700 | | 30 |
| Cardolite® NX-9203 | 20 | |
| Rokopol® M1170 | 5,5 | |

(fortgesetzt)

| | |
|---|---|
| Wasser | 3,5 |
| Tegostab® B8736LF2 | 0,4 |
| RZETA® | 1,4 |
| Dabco® NE300 | 0,4 |

Isocyanat-Komponente (Specflex® NS540), Mischungsverhältnis Polyol : MDI = 100 : 46, formgeschäumte Dichte 82kg/m$^3$

Beispiel 2:

Ausführungsbeispiel für viskoelastisch modifizierten Formweichschaum (verbessertes Dämpfungsverhalten durch höheren Verlustfaktor bei gleicher Dichte / Vermeidung - aus akustischer Sicht unerwünschter Zunahme der Schaumhärte) im Sinne der vorliegenden Erfindung

Polyol-Komponente:

| | | |
|---|---|---|
| Voranol® CP6001 | 70 | |
| Cardolite® NX-9203 | 30 | |
| Rokopol® M1170 | 5 | |
| Wasser | 5 | |
| Concentrol® STB-PU1259PF | | 0,3 |
| RZETA® | | 1,25 |
| Dabco® NE300 | | 0,35 |

Isocyanat-Komponente (Specflex® NS540), Mischungsverhältnis Polyol : MDI = 100 : 53

**Patentansprüche**

1. Polyurethan-Schaumstoff-Formulierung für die Herstellung von viskoelastischen PUR-Formschäumen, umfassend:

   a) ein Polyesterpolyol mit einer Hydroxyl-Funktionalität von 2, einer Hydroxylzahl im Bereich von 50 bis 150 mgKOH/g

   b) gegebenenfalls ein Polyetherpolyol mit einer Hydroxyl-Funktionaliät von 3, einer Hydroxylzahl im Bereich von 180 bis 250 mgKOH/g

   c) ein Polyetherpolyol mit einer Hydroxyl-Funktionalität von 3, einer Hydroxylzahl im Bereich von 20 bis 40 mgKOH/g

   d) ein Block/ Copolymer mit einer Hydroxylzahl im Bereich von 25 bis 45 mgKOH/g und

   e) eine Kombination katalytisch wirksamer sowie stabilisierender Additive,

   **dadurch gekennzeichnet, dass** der Anteil der Komponente (a) 5 bis 30 Gew.-%, bezogen auf die Polyolkomponente beträgt.

2. Formulierung nach einem der Ansprüche 1, **dadurch gekennzeichnet, dass** der Anteil der Komponente (b) 0 bis 55 Gew.-%, bezogen auf die Polyolkomponente beträgt.

3. Formulierung nach einem der Ansprüche 1 oder 2, **dadurch gekennzeichnet, dass** der Anteil der Komponente (c) 40 bis 95 Gew.-%, bezogen auf die Polyolkomponente beträgt.

4. Formulierung nach einem der Ansprüche 1 bis 3, **dadurch gekennzeichnet, dass** der Anteil der Komponente (d) 2 bis 10 Gew.-%, bezogen auf die Polyolkomponente beträgt.

**5.** Formulierung nach einem der Ansprüche 1 bis 4, **dadurch gekennzeichnet, dass** das Polyesterdiol auf CNSL basiert.

**6.** Formulierung nach einem der Ansprüche 1 bis 5, **dadurch gekennzeichnet, dass** sich das Polyetherpolyol der Komponente (b) und/ oder der Komponente (c) von Glycerin ableitet.

**7.** Formulierung nach einem der Ansprüche 1 bis 6, **dadurch gekennzeichnet, dass** das Block/Copolymer von Ethylenoxid und/oder Propylenoxid auf Gycerin basiert.

**8.** Formulierung nach einem der Ansprüche 1 bis 7, **dadurch gekennzeichnet, dass** die katalytisch aktiven Additive mindestens eine reaktive Wasserstoff-azide Gruppe aufweisen.

**9.** Verfahren zur Herstellung weichelastischer und viskoelastischer Formschäume, **dadurch gekennzeichnet**, das man

    A) eine Poly-Isocyanat-Komponente,
    B) eine Formulierung nach einem der Ansprüche von 1 bis 8,
    C) Wasser und
    D) einen oder mehrere Katalysatoren sowie
    E) gegebenenfalls weitere Hilfsstoffe, Füllstoffe, Stabilisatoren und oder Treibmittel zur Reaktion bringt.

**10.** Verfahren nach Anspruch 9, **dadurch gekennzeichnet, dass** man MDI oder ein Präpolymer auf Basis von MDI mit einem NCO-Gehalt von 22 bis 33%, bevorzugt in einem Bereich von 28 bis 32% einsetzt.

**11.** Verfahren nach Anspruch 9 oder 10, **dadurch gekennzeichnet, dass** der MDI-Index in einem Bereich von 50 bis 100 liegt.

**12.** Viskoelastischer Schaum, erhältlich durch im Reaktionsspritzguss, Gießverfahren oder als Blockschaum mit einer Formulierung gemäß einem der Ansprüche 1 bis 8.

**13.** Formteil, umfassend den viskoelastischen Schaum nach Anspruch 12.

**14.** Verwendung eines Formteils nach Anspruch 13 als Schallisolierung.

**Claims**

**1.** A polyurethane foam formulation for the production of viscoelastic PUR moulded foams comprising:

    a) a polyester polyol having a hydroxyl functionality of 2, a hydroxyl value in the range of 50 to 150 mgKOH/g
    b) optionally, a polyether polyol having a hydroxyl functionality of 3, a hydroxyl value in the range of 180 to 250 mgKOH/g
    c) a polyether polyol having a hydroxyl functionality of 3, a hydroxyl value in the range of 20 to 40 mgKOH/g
    d) a block/copolymer having a hydroxyl value in the range of 25 to 45 mgKOH/g; and
    e) a combination of catalytic and stabilising additives,

**characterized in that** the proportion of the component (a) is 5 to 30 Gew.-% based on the polyol component.

**2.** The formulation according to claim 1, **characterized in that** the proportion of component (b) is 0 to 55% by weight, based on the polyol component.

**3.** The formulation according to any one of claims 1 to 2, **characterized in that** the proportion of component (c) is 40 to 95% by weight, based on the polyol component.

**4.** The formulation according to any one of claims 1 to 3, **characterized in that** the proportion of component (d) is 2 to 10% by weight, based on the polyol component.

**5.** The formulation according to any one of claims 1 to 4, **characterized in that** the polyesterdiol is CNSL-based.

6. The formulation according to any one of claims 1 to 5, **characterized in that** the polyether polyol of component (b) and/or component (c) is derived from glycerol.

7. The formulation according to any one of claims 1 to 6, **characterized in that** the block/copolymer of ethylene oxide and/or propylene oxide is based on gycerol.

8. The formulation according to any one of claims 1 to 7, **characterized in that** the catalytically active additives comprise at least one reactive hydrogen azide group.

9. Method for the production of soft-elastic and visco-elastic moulded foams, **characterised in that**

    A) a poly-isocyanate component,
    B) a formulation according to any one of claims from 1 to 8,
    C) water and
    D) one or more catalysts; and
    (E) where appropriate, other excipients, fillers, stabilisers and/or blowing agents

    are brought to reaction.

10. The method according to claim 9, **characterized in that** MDI or a prepolymer based on MDI with an NCO content of 22 to 33%, preferably in a range of 28 to 32%, is used.

11. The method according to claim 9 or 10, **characterized in that** the MDI index is in a range from 50 to 100.

12. A viscoelastic foam obtainable by reaction injection moulding, casting or as a slabstock foam comprising a formulation according to any one of claims 1 to 8.

13. A moulding part comprising the viscoelastic foam of claim 12.

14. Use of a moulding part according to claim 13 as sound insulation.

**Revendications**

1. Formulation de mousse de polyuréthane pour la fabrication de mousses moulées viscoélastiques en PUR, comprenant :

    a) un polyesterpolyol ayant une fonctionnalité hydroxyle de 2, un indice d'hydroxyle compris entre 50 et 150 mgKOH/g
    b) éventuellement un polyétherpolyol ayant une fonctionnalité hydroxyle de 3, un indice d'hydroxyle compris entre 180 et 250 mgKOH/g
    c) un polyétherpolyol ayant une fonctionnalité hydroxyle de 3, un indice d'hydroxyle compris entre 20 et 40 mgKOH/g
    d) un copolymère séquencé ayant un indice d'hydroxyle compris entre 25 et 45 mgKOH/g et
    e) une combinaison d'additifs catalytiquement actifs et stabilisants,

    **caractérisé en ce que** la proportion du composant (a) est comprise entre 5 et 30 % en poids par rapport au composant polyol.

2. Formulation selon l'une des revendications 1, **caractérisée en ce que** la proportion du composant (b) est comprise entre 0 et 55 % en poids par rapport au composant polyol.

3. Formulation selon l'une des revendications 1 ou 2, **caractérisée en ce que** la proportion du composant (c) est comprise entre 40 et 95 % en poids par rapport au composant polyol.

4. Formulation selon l'une des revendications 1 à 3, **caractérisée en ce que** la proportion du composant (d) est comprise entre 2 et 10 % en poids par rapport au composant polyol.

**5.** Formulation selon l'une des revendications 1 à 4, **caractérisée en ce que** le polyesterdiol est à base de CNSL.

**6.** Formulation selon l'une des revendications 1 à 5, **caractérisée en ce que** le polyétherpolyol du composant (b) et/ou du composant (c) est dérivé du glycérol.

**7.** Formulation selon l'une des revendications 1 à 6, **caractérisée en ce que** le bloc/copolymère d'oxyde d'éthylène et/ou d'oxyde de propylène est à base de glycérine.

**8.** Formulation selon l'une des revendications 1 à 7, **caractérisée en ce que** les additifs catalytiquement actifs présentent au moins un groupe réactif hydrogène-azide.

**9.** Procédé de fabrication de mousses moulées souples et viscoélastiques, **caractérisé en ce que** l'on

  A) un composant polyisocyanate,
  B) une formulation selon l'une des revendications 1 à 8,
  C) de l'eau et
  D) un ou plusieurs catalyseurs ainsi que
  E) le cas échéant, d'autres adjuvants, charges, stabilisateurs et/ou agents gonflants

pour faire réagir le tout.

**10.** Procédé selon la revendication 9, **caractérisé en ce que** l'on utilise du MDI ou un prépolymère à base de MDI avec une teneur en NCO de 22 à 33 %, de préférence dans une plage de 28 à 32 %.

**11.** Procédé selon la revendication 9 ou 10, **caractérisé en ce que** l'indice MDI se situe dans une plage comprise entre 50 et 100.

**12.** Mousse viscoélastique, obtenue par moulage par injection-réaction, moulage ou sous forme de mousse en blocs, avec une formulation selon l'une des revendications 1 à 8.

**13.** Pièce moulée comprenant la mousse viscoélastique selon la revendication 12.

**14.** Utilisation d'une pièce moulée selon la revendication 13 comme isolation acoustique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 40010044 A1